# EUROPEAN PATENT SPECIFICATION

(11) **EP 3 099 179 B1**
(45) Date of publication and mention of the grant of the patent: **29.08.2018**
(21) Application number: 15720223.5
(22) Date of filing: 27.01.2015
(51) Int. Cl.: A22C 21/00

(54) **METHOD AND APPARATUS FOR MEASURING MEAT PRODUCTS MOVING SEQUENTIALLY ALONG A MEAT PROCESSING LINE**
VERFAHREN UND VORRICHTUNG ZUR MESSUNG VON SICH SEQUENTIELL ENTLANG EINER FLEISCHVERARBEITUNGSLINIE BEWEGENDEN FLEISCHPRODUKTEN
PROCÉDÉ ET APPAREIL DE MESURE DE PRODUITS DE VIANDE SE DÉPLAÇANT SÉQUENTIELLEMENT LE LONG D'UNE LIGNE DE TRANSFORMATION DE VIANDE

(30) Priority: 28.01.2014 US 201461932304 P
(43) Date of publication of application: 07.12.2016
(73) Proprietor: Foodmate B.V., 3281 NJ Numansdorp (NL)
(72) Inventor: VOORHAM, Abraham Adrianus Cornelis, 3281 NJ Numansdorp (NL)
(74) Representative: V.O.
(86) International application number: PCT/IB2015/000318
(87) International publication number: WO 2015/114461

(56) References cited:
- EP-A1- 0 442 554
- WO-A1-2004/106020
- US-A- 4 480 353

## Description

### REFERENCE TO RELATED APPLICATION

Priority is hereby claimed to the filing date of U. S. provisional patent application 61/932,304 entitled Method and Apparatus for Measuring Meat Products Moving Sequentially Along a Meat Processing Line filed on 28 January 2014.

### TECHNICAL FIELD

This disclosure relates generally to high speed meat processing and more particularly to the processing of poultry legs to remove drumstick and thigh meat from the legs in the production of a boneless meat product.

### BACKGROUND

In the meat processing industry, it is common to suspend meat parts from an overhead conveyor that moves the meat parts sequentially along a processing line. At various stations along the processing line operations are performed on the meat parts such as, for example, cutting, stripping, eviscerating, deboning, and the like. This is particularly true in the poultry processing industry, where birds and bird parts are suspended from shackles and processed as they are conveyed in sequence along the processing line. The present invention will be described within the context of poultry processing and particularly in the context of processing chicken legs that have been severed from birds. It will be understood, however, that the invention is not limited to the processing of chicken legs or poultry, but may be applied to the processing of virtually any meat products in a high speed processing plant.

A severed chicken leg is made up of a drumstick and a thigh and the thigh bone or femur and drumstick bone or tibia meet within the leg at a knee joint. The severed drumstick terminates at its free end in an ankle joint or hock. In recent years, boneless drumstick and thigh meat have become popular. Accordingly, automated poultry leg deboning machines have been developed to strip meat from the drumstick bone and from the thigh bone as chicken legs are conveyed along the processing path. In one such deboning process, chicken legs are suspended by their hocks from overhead shackles and conveyed along a processing path. Drumstick meat is mechanically stripped from the drumstick bone down to or just past the knee joint. The leg is then severed by a blade at the knee joint so that the thigh can be hung by its hip joint and the drumstick and thigh meat stripped together from the thigh bone.

In the past, stationary or rotating knives have been positioned along the processing line to engage each chicken leg as it passes and cut through the leg at the knee joint. A problem has long existed, however, in that the lengths of the chicken drumsticks can vary from leg to leg by a substantial amount. As a result, the cuts, which ideally are made precisely at the knee joint, are not consistent from leg to leg. If the drumstick of a chicken leg is longer than the norm, for example, the cut will be made above the knee joint in the drumstick. Conversely, if a drumstick is shorter than the norm, the cut will be made below the knee joint in the thigh. In either case, when the meat is stripped from the bones, the resulting meat may well contain cartilage and bone fragments and even entire knuckles because of the imprecise location of the cut. Thus, additional manual trimming steps have been required in the past to remove these bone fragments and cartilage from the boneless meat product. This manual trimming increases the overall cost of processing chicken legs and ultimately results in lower yield.

The ideal location to sever the chicken leg is precisely at the knee joint. Such a cut tends to leave the least amount of bone fragments and cartilage in the resulting boneless meat product, which reduces manual trimming and associated cost and increases meat yield. A need therefore exists for a method and apparatus that performs the cut of a chicken leg precisely at the location of the knee joint for each leg moving along the processing line. It is to the provision of such a method and apparatus that the present invention is primarily directed.

EP0442554A1 discloses a method for cutting poultry legs at the knee joint wherein the leg is bent to locate said joint and the cut is applied while the leg is bent.

### SUMMARY

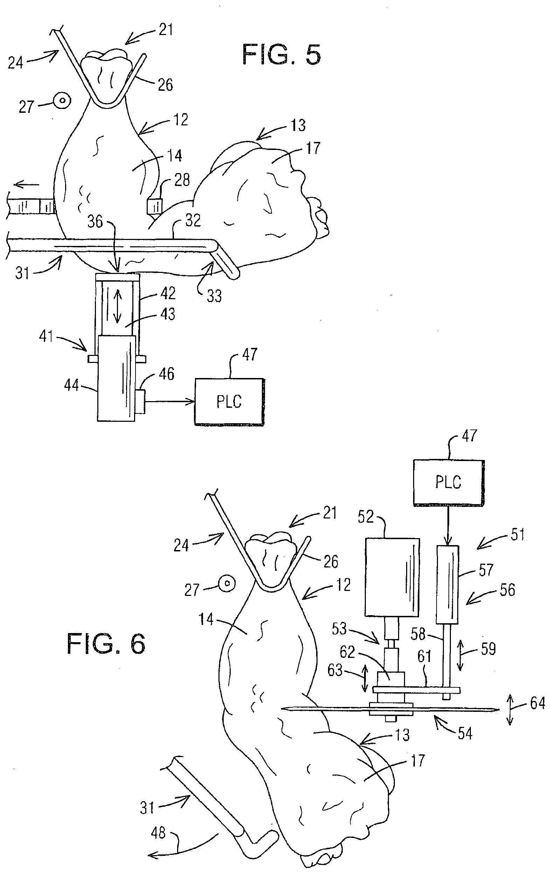

Briefly described, a cutting system for poultry leg processing includes a measuring station that measures the length of the drumstick of each leg as the leg passes while moving along the processing path. The measuring device of the station may be a mechanical contact measuring device such as in the exemplary embodiments described below, or alternatively may be a contactless optical measuring device. Such an alternative arrangement might include vertical arrays of light emitters and paired optical sensors positioned on either side of the processing path. As a bent leg, such as that of Fig. 5, passes between the opposite vertical arrays of light emitters and optical sensors, a measurement is determined by which optical sensors detect a light beam and which do not (i.e., which beams are blocked by the drumstick). In either case, the measured length is conveyed to a Programmable Logic Controller (PLC) or other programmable controller configured to control operation of the apparatus. A cutting station is disposed downstream of the measuring station and includes a rotating cutter blade positioned to engage and sever the chicken leg of each chicken leg at the knee joint as the leg passes. The cutter blade is mounted for vertical movement with respect to the suspended legs and the vertical position of the blade is established by a linear actuator. The linear actuator is, in turn, coupled to and controlled by the PLC such that the PLC can position the cutter blade at any desired vertical position within the range of the actuator.

The PLC is programmed to determine for each leg the precise vertical position of the knee joint based upon the length of the drumstick previously measured at the measuring station. Prior to encountering each suspended chicken leg, the PLC instructs the cutter blade to move to the vertical position corresponding to the determined knee joint position for that leg. The bones of each chicken leg are thus cut and severed precisely at the location of the knee joint between the drumstick bone and the thigh bone. As a result, when the meat is stripped from the bones, the resulting boneless meat product contains a minimum amount of the knee cap, cartilage, and bone fragments resulting from the cut. The need for manual post trimming is thus greatly reduced, related cost is reduced, and yield is increased.

The invention will be better understood and appreciated upon review of the detailed description set forth below made in conjunction with the annexed drawing figures, which are briefly described as follows.

### BRIEF DESCRIPTION OF THE DRAWINGS

Fig. 1 is a side view of a chicken leg showing internal bones in phantom line.
Fig. 2 shows a chicken leg from the thigh side with the leg suspended from a shackle and moving in a processing direction.
Fig. 3 shows the suspended chicken leg being gripped by a hook according to the invention.
Fig. 4 is a side view of the chicken leg gripped by a hook and with a lift arm pivoting upwardly toward the thigh.
Fig. 5 is a side view showing the thigh of the chicken leg lifted by the lift arm with the drumstick passing over a measuring device.
Fig. 6 is a side view of the chicken leg with the thigh being released by the lift arm and approaching a cutter blade to be cut.
Fig. 7 is a perspective view of a carousel with hooks and lift arms attached according to one embodiment of the invention.
Fig. 8 is a perspective view illustrating one embodiment of the lift arm assembly.
Fig. 9 is a perspective view illustrating one embodiment of the measuring device.
Fig. 10 is a perspective view illustrating a preferred embodiment of articulating cutter blade assembly.
Fig. 11 is a perspective view illustrating one end of a processing machine incorporating the measuring and cutting system of the invention.
Figs. 12a-12c are sequential photographs showing chicken legs being conveyed in a processing direction, engaging, being measured by, and then leaving the measuring device.
Figs. 13a-13b are sequential photographs showing a measured chicken leg approaching and then engaging a rotary cutter that has been vertically adjusted based on the previously measured length of the drumstick and thus vertical position of the knee joint.
Fig. 14 is a perspective view showing an alternate embodiment of the measuring device for positioning along a straight portion of the processing path.
Fig. 15 is a perspective view of the device of 14 seen from the opposite side thereof.
Fig. 16 is an end view of the measuring device of Fig. 14 looking in the downstream direction along the processing path.
Fig. 17 shows a chicken leg just as it enters the measuring device of Fig. 14.
Fig. 18 shows a chicken leg as it nears the end of the measuring device of Fig. 14 with the length of the drumstick being measured by the sensor.

### DETAILED DESCRIPTION

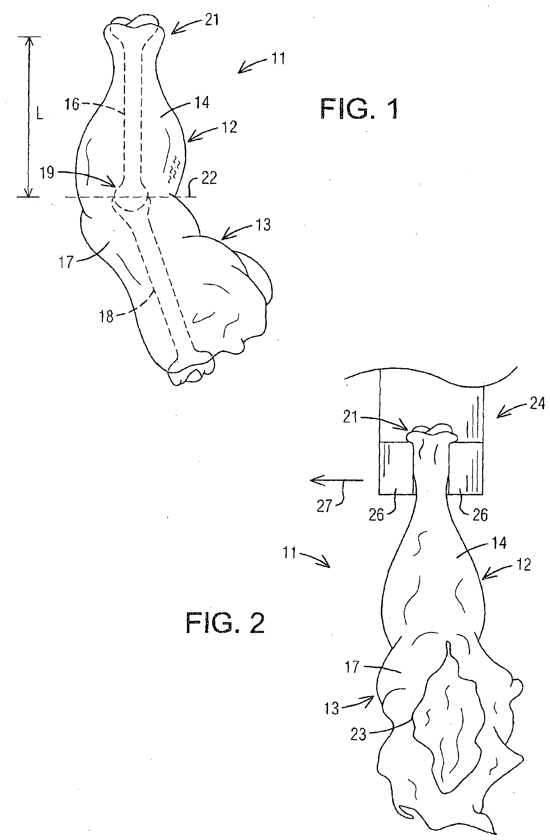

The invention will now be described in more detail with reference to the drawing figures, wherein like reference numerals indicate like parts throughout the several views. Further, the invention will be described within the context of processing chicken legs in a poultry processing plant. It will be understood, however, that the invention is not limited to chicken legs but can be applied to other poultry legs. Figs. 1-6 illustrate the method of the invention performed in steps on a chicken leg with the meat still on both the drumstick bone and on the thigh bone. As mentioned above, however, in other deboning processes, the meat may be stripped from the drumstick bone to or past the knee joint before the cut is made. In either case, it is desirable to make the cut precisely at the knee joint for the reasons stated above. Accordingly, Figs. 1-6 should be understood to include any processes sequence for removing meat from a chicken leg.

Fig.1 is a side view of a typical chicken leg 11. The leg 11 includes a drumstick 12 having drumstick meat 14 surrounding a drumstick bone 16 and a thigh 13 having thigh meat 17 surrounding a thigh bone 18. The drumstick has a free end or hock 21. The drumstick bone 16 and the thigh bone 18 meet at a knee joint 19. When producing boneless meat product from chicken legs, the chicken leg generally is severed at the knee joint at some stage of the process as indicated by cut line 22. This may occur before or after drumstick meat is stripped from the drumstick bone to or past the knee. In either case, it is highly desirable to sever the bones of the chicken leg precisely at the location of the knee joint to minimize cartilage and bone fragments in the resulting boneless meat product.

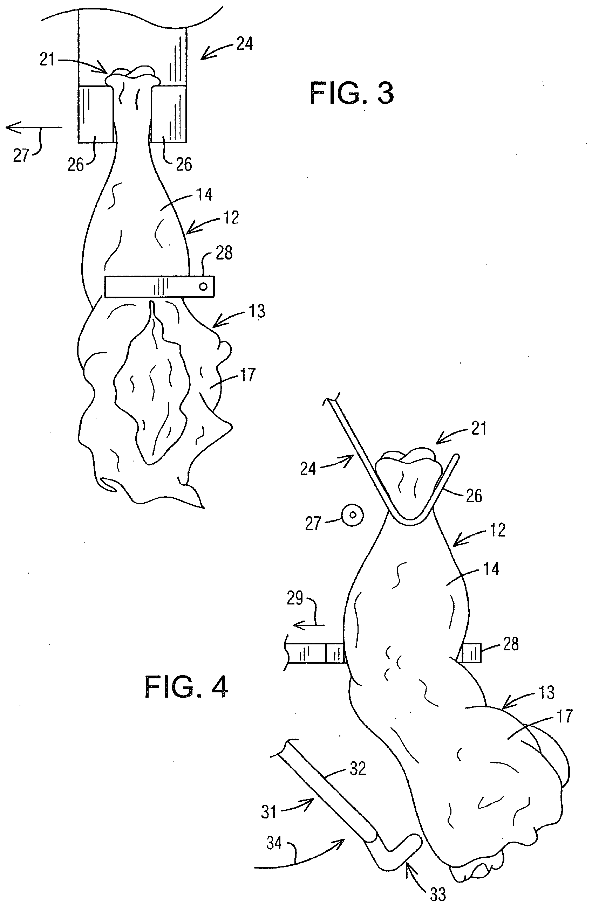

Fig. 2 illustrates the chicken leg 11 seen from the thigh side and suspended by its hock 21 from a shackle 24 having upwardly extending prongs 26, as is common in modern poultry processing plants. The shackle 24 is suspended in a known manner from an overhead conveyor chain (not shown) and the shackle and the chicken leg are conveyed along a processing path in a processing direction 27 by the conveyor chain. It will be understood that large numbers of chicken legs are suspended from numerous shackles and are conveyed in sequential fashion along the processing path for processing. Fig. 3 illustrates an initial step in one embodiment of the method of the present invention. As the chicken leg moves in the processing direction 27, which may be around a carousel as described below, a hook 28 is extended around the bottom portion of the drumstick and pulled in toward the drumstick so that the drumstick is grasped and held by the hook against upward movement.

Fig. 4 is a side view looking in a downstream direction of the chicken leg having been grasped and held by the hook 28 and being conveyed further along the processing path. A lift arm 31 having a rod 32 with a cradle 33 formed at its end is seen pivoting upwardly in direction 34 toward the thigh 13 of the chicken leg. All the while, the shackle 24, chicken leg 11, hook 28, and lift arm 31 are moving in synchronization in the processing direction 27, which is toward the viewer in Fig. 4. Again, the processing direction may be a circular path as the chicken legs are conveyed around a carousel. In another embodiment detailed below, the processing path is linear. In Fig. 5, the lift arm 31 has pivoted completely upwardly such that the thigh 13 of the chicken leg has become nestled in the cradle 33 and lifted upwardly by the lift arm. In the process, the chicken leg is bent at the knee joint to expose the bottom 36 of the drumstick 12 in a downwardly facing orientation. The hook 28 holds the bottom of the drumstick firmly so that the lifting of the thigh does not cause the hock 21 of the chicken leg to lift upwardly in the shackle 24.

With further reference to Fig. 5, the chicken leg, in its bent configuration, is seen with the bottom of the drumstick engaging a stationary measuring device 41. The measuring device in this embodiment, which is not limiting, includes a pivotable ramp 42 coupled at its free end to a plunger 43 that is slidably disposed in a sleeve 44. The ramp 42 is yieldably spring biased to a normal or uppermost orientation. When the ramp 42 is engaged by the bottom 36 of the drumstick 12, the drumstick pivots the ramp downwardly, which in turn moves the plunger 43 downwardly within its sleeve 44. When the drumstick is at the end of the ramp 42, the ramp and the plunger are fully depressed by the drumstick to a position that is indicative of the length of the drumstick. A linear sensor 46, which may be a contactless optical sensor, a mechanical sensor, or any other appropriate sensor, is configured to sense the distance that the plunger 43 has been depressed by the moving drumstick. The linear sensor is coupled to convey its sensed information to the PLC or other computer-based controller of the system.

Thus, as each chicken leg passes the stationary measuring device, a sensed distance indicative of the length of the drumstick of each leg is conveyed to the PLC. The PLC is programmed to calculate from this length the precise vertical position of the knee joint within the chicken leg taking into account factors such as the thickness of the meat where the drumstick engages the measuring device, the expected radius of the knee joint, and/or other parameters. It should be understood that the linear sensor might alternatively be replaced with a rotary sensor at the pivot point of the ramp or any other sensor that senses the extent to which the ramp is moved by the chicken leg. Further, the sensor need not be a mechanical sensor at all, but may be a contactless sensor such as opposite vertical arrays of light emitters and optical sensors between which the chicken leg passes. Accordingly, the scope of the invention is intended to include any device that senses information indicative of the length of the drumstick.

In Fig. 6, the chicken leg has moved further along or around the processing path 27 and is approaching a cutting station 51 having a rotary blade 54 positioned to cut and at least partially sever the chicken leg as the leg passes the cutting station. The lift arm 31 is seen pivoting back in direction 48 to its inactive position allowing the thigh of the chicken leg to drop back down to its normal position suspended from the drumstick. The hook 28 (Fig. 5) that prevented upward movement of the drumstick during measurement has been retracted or otherwise moved to release the bottom of the drumstick allowing it to hang freely from its shackle 24. The cutting station 51 includes a motor 52 coupled through shaft 53 to the rotary blade 54 so that the motor rotates the rotary blade 54 at a high rotation rate.

The shaft 53 passes through and is slidably journaled within an arbor 62. A coupling arm 61 is fixed to the arbor 62 and extends laterally therefrom to a free end. A controllable linear actuator 56 has a cylinder 57 from which a shaft 58 extends with the shaft being attached at its bottom end to the free end of the coupling arm 61. The linear actuator 56 is controllably coupled to the PLC 47 such that the PLC can be programmed to instruct the shaft 58 of the actuator to move a predetermined distance in the vertical direction as indicated by arrow 59. Such movement of the shaft 58 is transferred through the coupling arm 61 to the arbor 62, which causes the arbor 62 and the rotary cutter 54 to move vertically in like manner as indicated by arrows 63 and 64.

As discussed above, each chicken leg that approaches the cutting station 51 has previously had its drumstick measured by the measuring device 41 and the PLC has calculated the vertical position of the knee joint from this measurement. As the chicken leg approaches the cutting station 51, the PLC 47 instructs the linear actuator 56 to move the rotary cutter 54 up or down so that the position of the rotary cutter corresponds to the vertical location of the knee joint. The PLC can be programmed in a variety of ways to accomplish this. For example, a zero position of the blade corresponding to a drumstick of average length may be established with up or down movements of the blade being calculated based on the length of each drumstick as deviations from the average. In any case, for each chicken leg, the blade is moved vertically to the position of the knee joint that has been uniquely calculated for the length of the drumstick of that leg. In this way, a cut is made in each chicken leg precisely at the location of the knee joint as the leg passes the rotary cutter 54. Each chicken leg is custom pre-cut such that when the meat has been removed from the bones, the boneless meat product that results will contain a minimum amount of knee cap, cartilage, and bone fragments where the knee was located. Accordingly, manual post trimming of the meat products is greatly reduced, processing costs are reduced, and yield is increased.

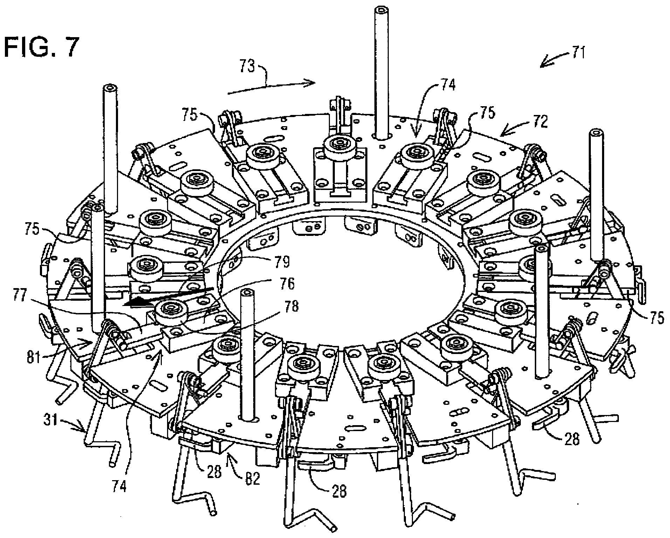

Fig. 7 shows one possible embodiment of a mechanism for operating the hook 28 and the lift arm 31. In this embodiment, a carousel 71 includes an annular or ringshaped mounting plate 72 having an array of radial slots 75 extending inwardly from its periphery. A gripping and lifting station is mounted to the mounting plate 72 at the location of each radial slot 75. It will be understood that during operation, the carousel 71 rotates in synchronization with the overhead conveyor such that each gripping and lifting station is aligned next to a suspended chicken leg as the chicken legs circle around with the carousel in a circular processing path. Each station includes a hook assembly 82 (described in more detail below) from which a hook 28 projects and a lift arm assembly 74 for raising and lowering a lift arm 31.

Each lift arm assembly 74 includes a slide block 76 mounted to the top of the mounting plate 72 with a slide bar 77 slidably disposed in the slide block. A cam follower 78 is attached to the slide bar and projects upwardly to ride in a cam track (not shown). The end of the slide bar 77 is coupled to a scissor linkage 81 that in turn is connected to the lift arm 31. Movement of the cam follower and slide bar inwardly toward the center of the carousel thus causes the lift arm to pivot upwardly while movement of the cam follower and slide bar away from the center of the carousel causes the lift arm to pivot downwardly. A plate (not shown) within which a cam track has been machined is disposed above the mounting plate with the cam followers 78 disposed in the cam track. The track is shaped in a known manner to cause the lift arms 31 to pivot upwardly at the appropriate position around the plate and to pivot back downwardly at the appropriate position as the carousel 71 rotates with respect to the cam track.

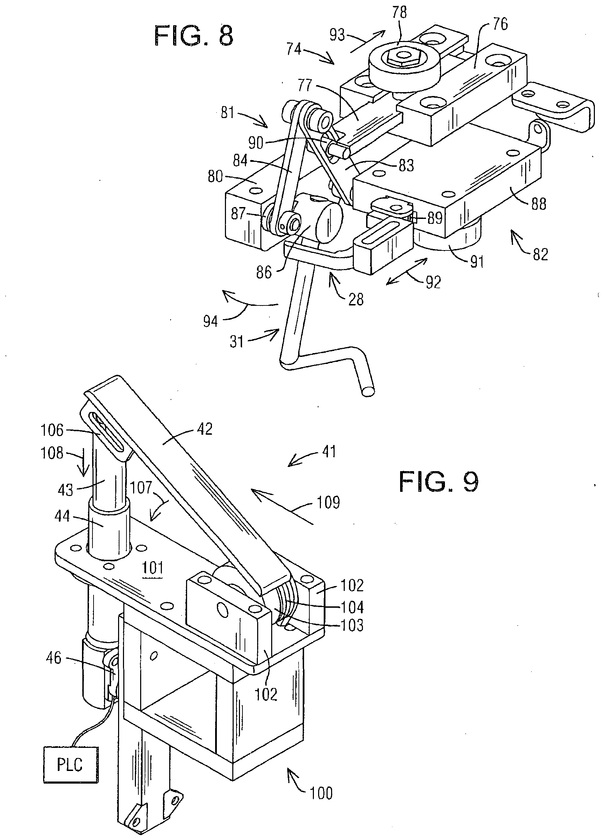

Fig. 8 illustrates the lift arm assembly 74 and the hook assembly 82 in more detail with the mounting plate removed for clarity. The lift arm assembly 74 includes slide block 76, slide arm 77, cam follower 78, and scissor linkage 81 as mentioned above. The scissor linkage 81 includes a first arm 83 pivotally mounted to a mounting block 80 and a second arm 84 that is pivotally mounted to the free end of the first arm 83. The lift arm 31 projects from a cylindrical pivot block 86 that is rotatably mounted to the mounting block 80. A pivot block link 87 is fixed to and projects from the pivot block 86 and is rotatably secured to the free end of the second arm 84 of the scissor linkage. A coupling pin 90 at the free end of the slide bar 77 extends through a slot in the first arm 83. From the forgoing description it will be understood that when the cam follower is moved by the cam track in direction 93, the slide bar 77 pulls back on the scissor linkage 81. This, in turn, raises the lift arm 31. Movement of the cam follower in the opposite direction lowers the lift bar.

With continued reference to Fig. 8, the hook assembly 82 includes a slide block 88 mounted to the bottom of the mounting plate 72 with a slide bar 89 slidably disposed in the slide block. A cam follower 91 is attached to the slide bar 89 and projects to a position where it can ride in a stationary cam track (not shown) disposed beneath the bottom side of the carousel. The hook 28 is connected to the slide bar 89. Movement of the cam follower back and forth in a radial direction thus causes the hook 28 to move correspondingly as indicated by arrow 92. The cam track is shaped in the traditional and known manner to cause the hook 28 to move out to extend around the bottom of a drumstick and then to retract radially inwardly to grip and secure the drumstick against vertical movement in its shackle as the drumstick passes over the measuring device. This gripping action is timed to hold the drumstick in place as the thigh is lifted, the drumstick measured, and the thigh released by the lift arm. The hook 28 can then be retracted or otherwise moved from around the drumstick so that a cut or pre-cut can be made through the knee joint of the chicken leg.

Fig. 9 illustrates in detail one possible embodiment of the measuring device 41, which is mounted below the processing path such that chicken legs approach the measuring device in the direction of arrow 109. The measuring device 41 in this embodiment (many other embodiments may be possible) comprises a plate 101 that is mountable to a selected support 100 of a poultry processing machine. A pair of ramp mounting blocks 102 is secured to the plate 101 at the rear end portion and project upwardly in spaced relationship. A cylindrical pivot mount 103 is rotatably mounted between the mounting blocks and ramp 42 is secured to the pivot mount 103 and extends forwardly therefrom. A coil spring 104 yieldably biases the pivot mount 103 and the ramp 42 toward the raised home position shown in Fig. 9.

A plunger attachment 106 is mounted beneath the free end of the ramp 42 and is attached to the upper end of a plunger 43, which is slidably disposed within sleeve 44. Accordingly, pivoting movement of the ramp 42 in the direct indicated by arrow 107 causes the plunger 43 to move downwardly in the direction of arrow 108. Linear sensor 46 is configured to sense one or more conditions indicative of the distance that the plunger moves and to convey the sensed information to the PLC as detailed above. It will thus be seen that as the bottom of a drumstick approaches and engages the ramp 42, the drumstick will pivot the ramp downwardly a distance corresponding to the length of the drumstick and the sensor will convey information indicative of this distance to the PLC controller.

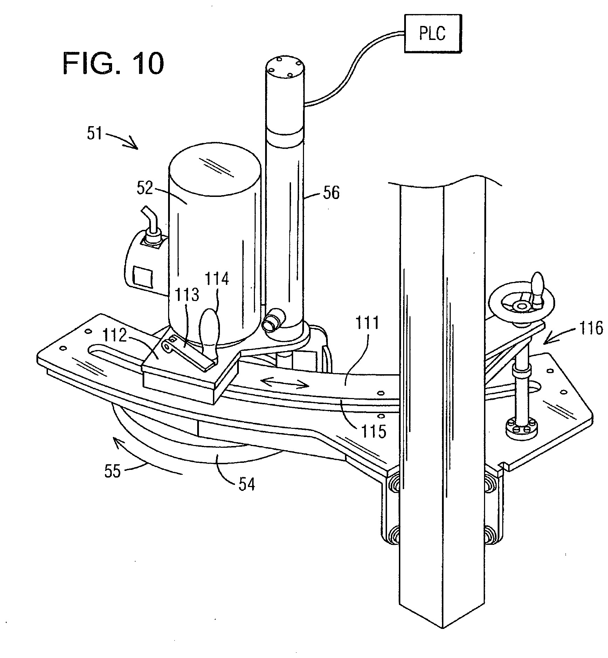

Fig. 10 illustrates one possible embodiment of the cutting station 51 of the apparatus. In this embodiment, the motor 52 and the linear actuator 56 are mounted to a mounting block 112. The mounting block 112, in turn, is mounted to a plate 111 disposed next to the carousel and having an arcuate slot formed therein. A locking arm 113 and a handle 114 are included on the mounting block 112. Accordingly, the position of the cutting station around the carousel downstream of the measuring device can be changed by disengaging the locking arm and sliding the mounting block in the arcuate slot to a different position around the carousel. The locking arm is then again engaged to lock the cutting station in its new position. A height adjustment 116 may be provided to adjust the height of the cutting station relative to the carousel to correspond, for example, to the size of poultry being processed.

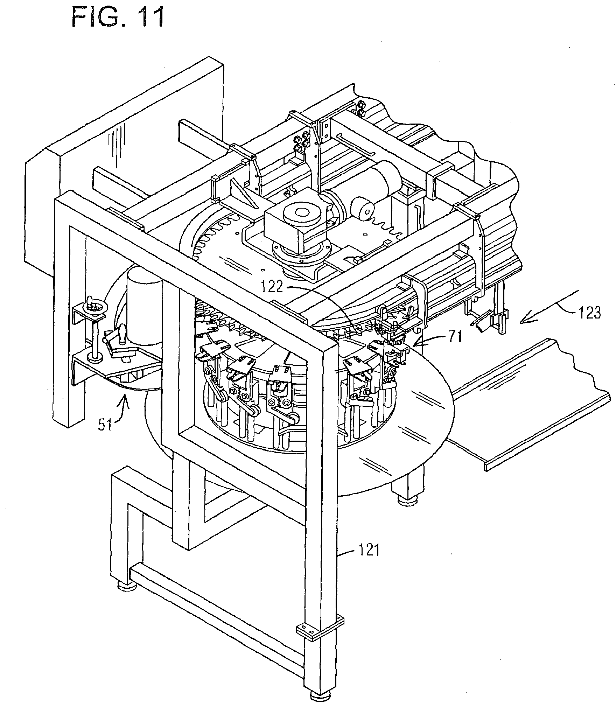

Fig. 11 illustrates a meat stripping station of a poultry processing line that incorporates the cutting station 51 of the invention. Here, the meat stripping station is configured as a carousel at one end of the poultry cut-up line, as is known in the art. An example of such a stripping station is disclosed in U.S. patent number 8,808,068 owned by the assignee hereof, which is hereby incorporated by reference in its entirety. In Fig. 11, the cutting station 51 is seen mounted to the frame of the machine near the end of the circular processing path extending around the meat stripping carousel. In this embodiment, the meat is first stripped from the drumstick to or just past the knee joint before the leg bones are cut at the knee joint as they pass the cutting station. It will be understood that the cutting station could be located at another location along the processing path to make its cut at the knee joint before meat is stripped from the drumstick of the leg. In either event, the vertical position of each knee joint has been previously determined at the measuring station as described above and the vertical location of the cutting disc is adjusted for each leg to make its cut at the previously determined position of the knee joint.

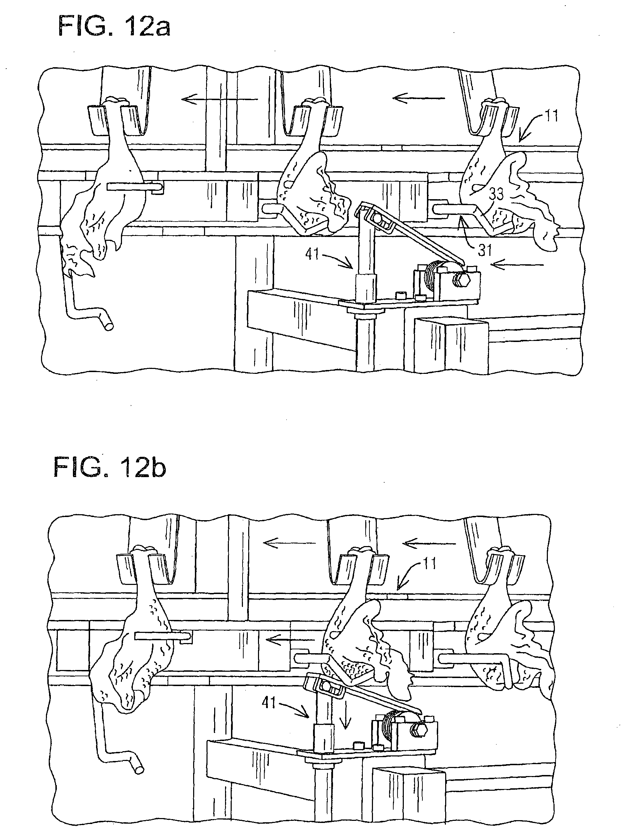

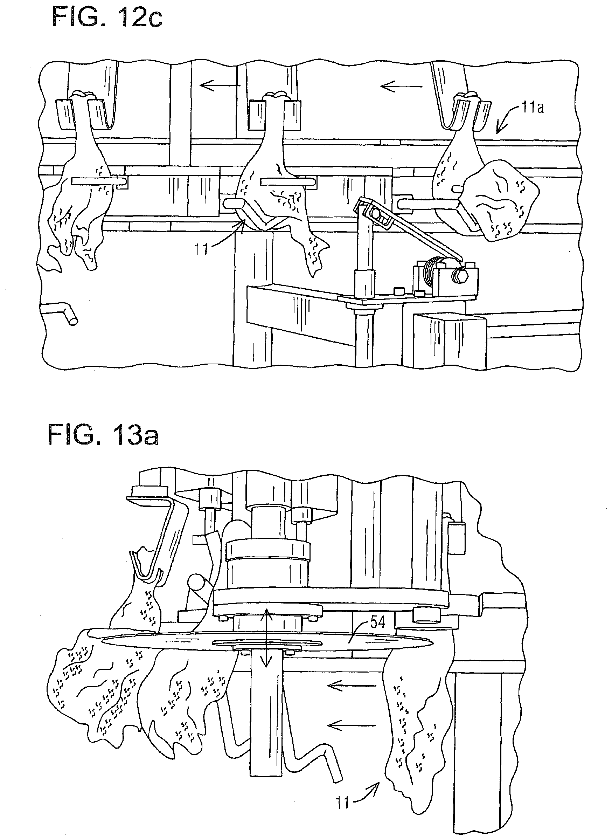

Figs. 12a - 12c illustrate a sequence showing a suspended chicken leg approaching, engaging, and leaving the measuring station according to one embodiment of the present invention. In this embodiment, the measuring station is located along a circular processing path extending around a carousel. In Fig. 12a, chicken legs are suspended by their hocks from shackles and are being moved in a circular processing direction indicated by the large arrows. The chicken leg on the right in Fig. 12a has its thigh lifted by the corresponding lift arm as described above and is approaching the measuring device 41. In Fig. 12b, the chicken leg 11 has moved further around the processing path and the bottom of the drumstick of the leg is engaging the ramp and pressing it downwardly in the direction indicated by the arrow. When the bottom of the drumstick reaches the end of the ramp, the ramp is fully pivoted and the plunger has reached its maximum depression. The linear sensor forwards information indicative of the distance of the depression to the PLC. In Fig. 12c, the now measured chicken leg 11 has moved past the measuring device and the next successive chicken leg 11a is seen approaching the measuring device to have its drumstick measured. In this way, each successive chicken leg moving along the processing line has its drumstick measured and this information is logged in the PLC.

It will be understood that the carousel around which the chicken legs travel as they are measured can be a dedicated carousel at a different location from the meat stripping carousel or can be incorporated into the meat stripping carousel, or can be located along a linear portion of the cut-up line as in a second embodiment described below. In either event, the PLC calculates and logs the location of the knee joint of each leg and synchronizes this information with the location of the cutting station so that the cutting blade is properly adjusted as each leg approaches to be cut at the knee joint..

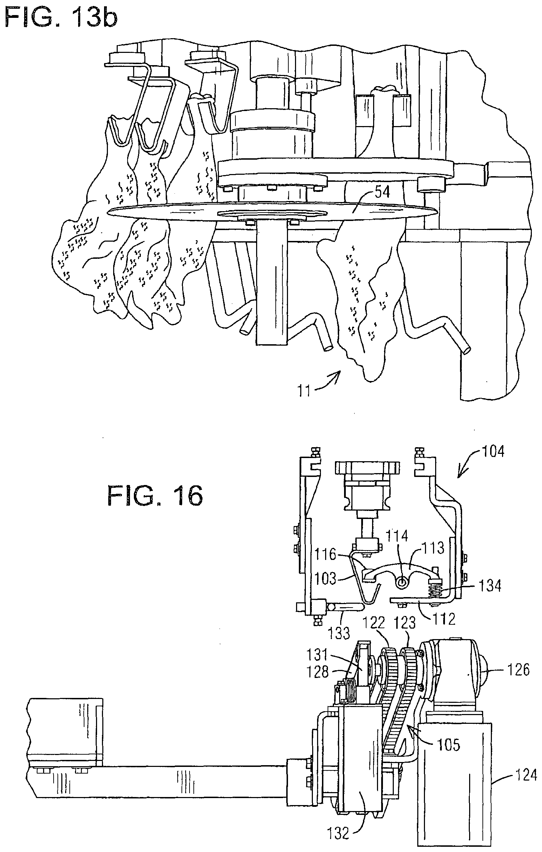

In Fig. 13a, the previously measured chicken leg 11 has moved around the carousel and is approaching the rotary blade 54 of the cutting station. Before the chicken leg 11 engages the rotary blade 54, the linear actuator is instructed by the PLC to move vertically to the position of the knee joint of the chicken leg. In Fig. 13b, the chicken leg 11 is engaging and being cut and severed at its knee joint by the rotary blade. For the next successive chicken leg, the position of the rotary blade is again adjusted so that the next cut will be made precisely at the knee joint of the next chicken leg and so on.

In Figs. 12a - 13b, the measuring station and the cutting station are each positioned around a dedicated carousel for the measurement and cutting or pre-cutting of suspended chicken legs. However, as shown in Fig. 11, the cutting station need not be in close proximity to the measuring station and can be located at any appropriate position along the cut-up line. Its location may depend, for example, upon whether it is desired to make the cut before or after meat is partially stripped from the leg or upon other process dependent factors.

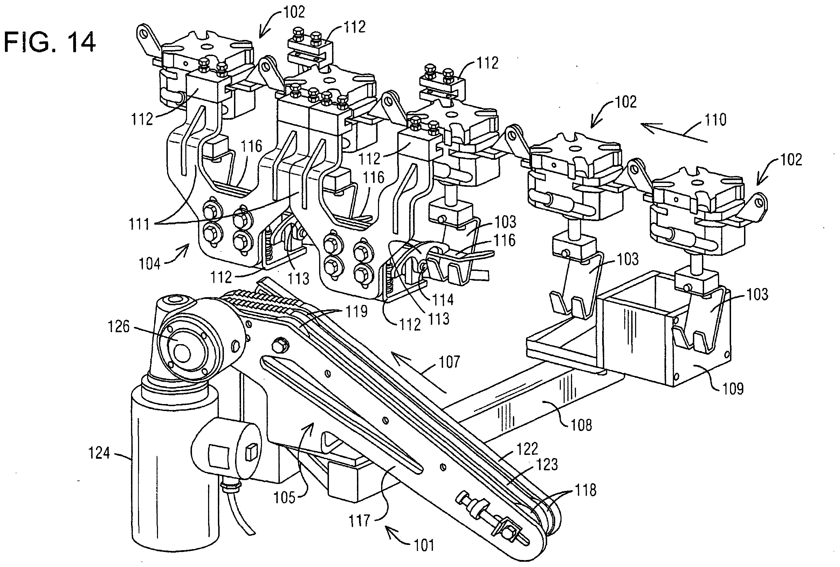

Figs. 14 - 18 illustrate an alternate embodiment of the measuring station of the invention configured to be located not around a carousel as with the just described embodiment, but along a straight or linear portion of a poultry cut-up line. Fig. 14 is a view toward the processing line from the outside and shows a plurality of shackle assemblies 102 being moved along a linear processing path 110 in a known manner. Each shackle assembly includes, among other features, a depending shackle 103 having upturned prongs spaced to receive and hold, in this example, the hock of a chicken leg. As the shackle assemblies move along the processing path 110 on an overhead conveyor (not shown), they approach a measuring station 101 that embodies principles of the present invention in an alternate form.

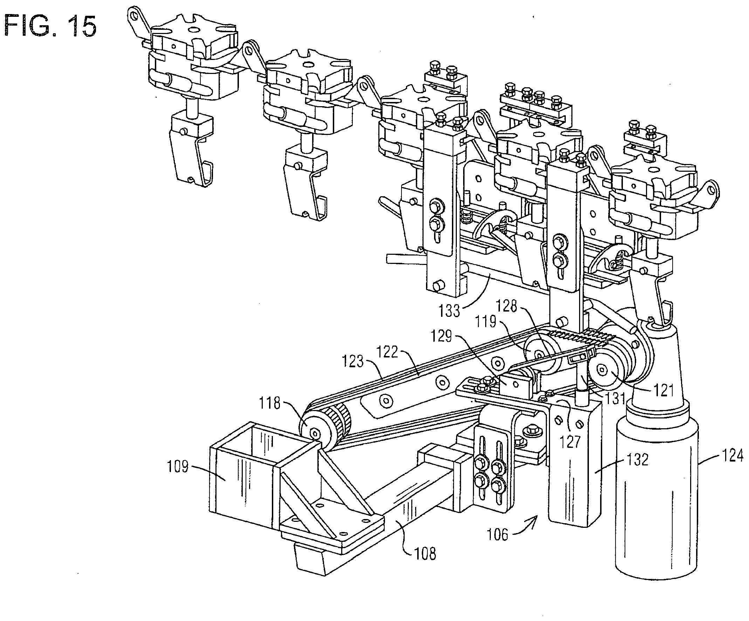

The measuring station 101 includes a moving ramp assembly 105 positioned vertically below the shackles 103 and a measuring device 106 (Fig. 15) located adjacent the downstream end of the moving ramp assembly. The ramp assembly 105 generally comprises a frame 117 that is adjustably attachable to a support beam 108 that, in turn, can be adjustably clamped to a frame member of a poultry processing line by means of a clamp 109. In this way, the ramp assembly can be adjusted to an optimized position with respect to the moving shackles above.

. The frame 117 supports a tail pulley 118 at the upstream end of the ramp assembly 105 and a head pulley 119 adjacent the downstream end of the ramp assembly. A drive pulley 121 is mounted to the frame 117 at its downstream end and is coupled through a transmission 126 for controlled rotation by a motor 124. The drive pulley and the head pulley preferably are substantially horizontally aligned with each other, although this is not a requirement or limitation of the invention. An inner belt 122 and an outer belt 123 are trained around the tail pulley, the head pulley, and the drive pulley and tightened such that activation of the servo motor 124 rotates the drive pulley and causes the belts to move in an upwardly inclined direction as indicated by arrow 107. The speed of the motor 124 is controllable and can be set so that the rate at which the belts 122 and 123 move in direction 107 is synchronized with the rate at which the shackle assemblies 102 above are conveyed along the processing path in direction 110.

As described in more detail below, the function of the ramp assembly 105 is the same as that of the lift arms 31 of the first described embodiment above. That is, belts of the ramp assembly engage the thigh of each chicken leg and progressively move the thigh outwardly and upwardly, thereby bending the leg at the knee joint. When the chicken leg reaches the measuring device 106, the thigh is moved upwardly out of the way and the drumstick can be measured as in the first described embodiment as the leg passes the measuring device 106. From this measurement, a desired location is selected approximately aligned with the knee joint of the leg where a cut or partial cut is to be made at a downstream cutting station.

A hold down assembly 104 is secured by clamps 112 to an overhead frame (not shown) and is positioned generally in the path of the shackles 103 of shackle assemblies 102. The hold down assembly 104 includes brackets 111 to which support plates 112 are adjustably attached with bolts as shown. A linear array of rocker arms 113 is secured to the support plates and each rocker arm has one end that is attached to a hold down plate 116 and another end that is yieldably biased upwardly by springs 134 (Fig. 16). The hold down plate 116 is positioned with respect to the shackles so that the hold down plate will bear against the tops of chicken leg hocks (or other joints if the legs are not suspended by the hocks) secured in the shackles as the legs are conveyed through the hold down assembly 104 and past the measuring station 101. More specifically, the hold down plate 116 preferably is positioned sufficiently low so that hocks within the shackles 103 will push upwardly on the hold down plate116 causing it to rise against the bias of springs 134. In this way the hold down plate 116 bears downwardly on the hocks with sufficient force (determined by the stiffness of the springs) to prevent the hocks from rising up in their shackles as chicken legs pass the measuring station 101 and are measured.

Fig. 15 is a view of the measuring station from the opposite side as Fig. 14 and shows better the measuring device 106 adjacent the downstream end of the ramp assembly. The measuring device 106 is substantially similar to measuring device 41 of the first described embodiment above and comprises a plate 127 to which a pivoting ramp 128 is attached. The pivoting ramp 128 is biased to its upwardly extending position as shown by a spring and the free end of the pivoting ramp 128 is attached to a plunger 131. The plunger 131 moves into and out of a digitizer 132 in response to pivoting movement of the pivoting ramp 128. The digitizer produces information indicative of distances that the plunger moves into the digitizer and thus also indicative of the distance that the free end of the pivoting ramp moves. As with the first described embodiment, the ramp is positioned such that the bent knee joint of a chicken leg passing over, engages, and pivots the ramp downwardly. This causes the plunger to move downwardly and the digitizer to produce information indicative of this movement and therefore indicative of the length of the drumstick from the hock to the knee joint. From the information produced by the digitizer, a desired vertical location at which the leg should be cut is determined by the machine controller. This location is subsequently used to adjust the vertical position of a downstream knife to cut each leg precisely at the desired location. Each chicken leg moving along the processing path is thus custom cut for the most efficient and effective removal of meat from the leg.

Fig. 16 shows the measuring station 101 as seen from a downstream location looking upstream. This figure shows perhaps more clearly the function of the hold down mechanism 104 and the outwardly angled orientation of the moving ramp assembly 105. More specifically, the hold down bar 116 is seen attached to one end of rocker arms 113 (only one of which is visible in Fig. 16). The hold down bar extends along and above the bight portion of the shackles 103. The other ends of the rocker arms 113 are yieldably biased upwardly by springs 134, which, in turn biases the hold down bar 116 downwardly. As described in more detailed below, the hold down bar 116 is positioned to bear downwardly on the hocks (or other joints) of chicken legs suspended from the shackles 103 and the spring tension is selected to prevent the hocks from rising upwardly in their shackles as drumsticks are measured.

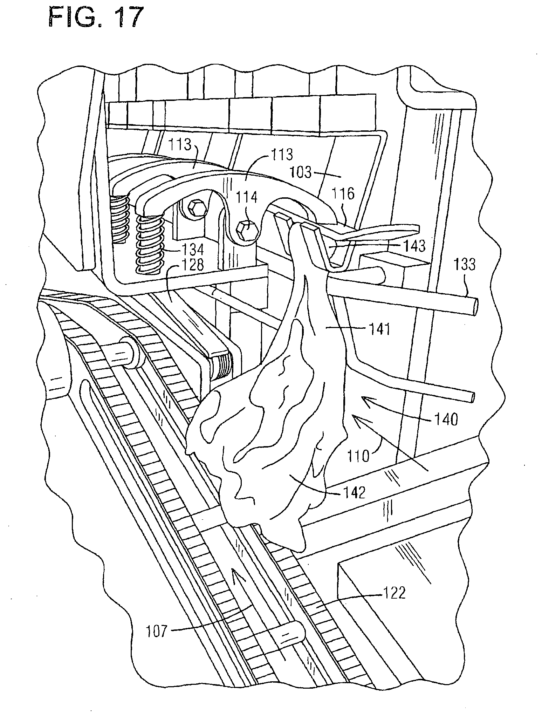

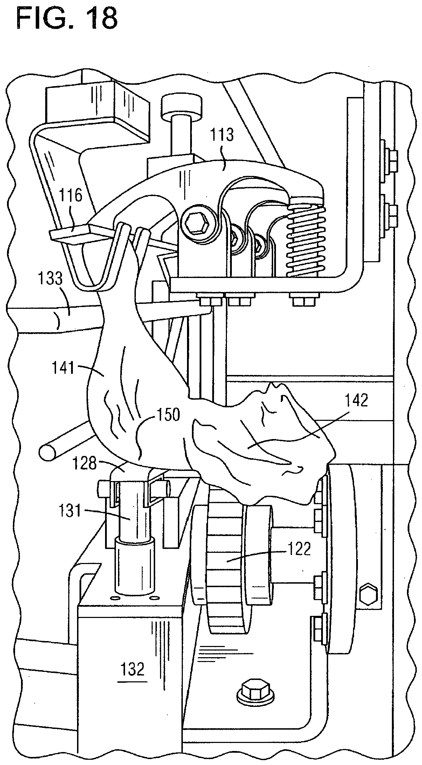

Also as shown in Fig. 16, the moving ramp assembly 105 is mounted beneath the processing path and is oriented such that its inner and outer belts 122 and 123 angle outwardly (to the right in Fig. 16) as they are moved up the incline from the upstream end to the downstream end of the ramp assembly. As will be appreciated from the discussions of Figs. 17 and 18 below, the outwardly angled orientation of the belts helps to pull thighs of chicken legs outwardly as they are bent upwardly while riding up the incline of the moving belts. This ensures that the knee bone at the bottom of the suspended leg is cleanly exposed so that the drumstick can be accurately measured by the measuring device at the downstream end of the ramp assembly. Guide bar 103 helps to hold the drumstick in the proper lateral position as it traverses the measuring station.

Figs. 17 and 18 illustrate the operation of the measuring station of this invention as a chicken leg is conveyed through the station. While only one chicken leg is shown in these figures for clarity, it will be appreciated by the skilled artisan that chicken legs normally are conveyed along the processing path and through the measuring station in spaced sequential relationship and each is measured in turn. Referring to Fig. 17, a chicken leg 140 has a drumstick 141 connected to a thigh 142 by a knee joint (not visible). The leg is suspended from a shackle 103 by the hock 143 of the drumstick 141 and the leg 140 is conveyed by the shackle along a processing path 110. Hold down bar 116 is seen pressing downwardly under the biasing influence of springs 134 on the top of the hock 143 in order to prevent the hock from moving upwardly in the shackle 103. The belt 122 of the ramp assembly is being driven in an upwardly ramped and outwardly angled direction as indicated by arrow 107.

In Fig. 17, the lower end of the thigh 142 is just engaging the belt 122 (only one belt is shown in this figure, but it will be understood that the invention is intended to encompass one, two, or more belts as an application might dictate). The upwardly inclined movement of the belt 122 then carries the thigh upwardly while the outwardly angled orientation of the belt 122 pulls the thigh slightly outwardly or to the left in Fig. 17. The ultimate result is that the leg 140 is bent at its knee joint so that the knee of the leg is cleaning exposed at the bottom of the drumstick 141. This is best illustrated in Fig. 18, which shows the leg 140 as it appears when it reaches the downstream end of the measuring station. The thigh 142 is seen to have been bent upwardly and pulled slightly outwardly by the moving belt 122 of the ramp assembly to expose the knee 150 at the bottom of the drumstick 140. The ramp assembly along with the hold down bar 116 and rail 133 hold the chicken leg in this condition as it moves over the pivoting ramp 128 of the measuring device. This pivots the ramp 128, pushing the plunger 131 downwardly, in turn causing the digitizer 132 to produce a signal carrying information indicative of the vertical location of the knee joint within the chicken leg.

As with the first described embodiment, the information is conveyed to the machine controller and is assigned to the leg as it moves further along the processing path. As the leg eventually approaches the rotary cutter configured to cut the leg at desired location, usually at the knee joint, the vertical position of the cutter is adjusted to make its cut precisely at desired location with the advantages heretofore discussed.

The invention has been described herein in terms of preferred embodiments and methodologies considered by the inventors to represent the best modes of carrying out the invention. It will be clear to the skilled artisan, however, that a wide array of additions, deletions, and variations may be made to the illustrated exemplary embodiments without departing from the scope of the invention embodied therein. For example, in the preferred embodiment, the chicken leg is suspended by the hock of the drumstick and the length of the drumstick is measured. An alternative might be that the chicken leg is suspended by its hip joint and the length of the thigh is measured. The cut may be made completely through the bone of the chicken leg at the knee joint as described, or it may be made partially through the bone or just through the meat of the chicken leg depending upon the ultimate purpose of the cut. The rotary cutter may be replaced by a stationary cutter, a laser cutter, a saw, or any other device capable of cutting through the chicken leg at the desired location. The rocker arms and springs arrangement for holding down the hocks of chicken legs is considered the best mode, but other devices and techniques for holding the chicken leg downwardly within its shackle may be substituted to obtain the same result. Also, while a moving ramp assembly has been shown to illustrate a mode of carrying out the invention, this should not be construed as a limitation of the invention. Other devices such as, for instance, an inclined screw conveyor might be substituted for the illustrated ramp assembly with comparable results. In fact, if a screw conveyor may offer certain advantages such as, for instance, the ability to design the screw threads to accommodate a desired timing of the conveyor. All such alternatives and others are intended to be covered by the scope of the invention and should be considered to be equivalent to the specific elements disclosed in the preferred embodiment.

## Claims

1. A method of cutting a poultry leg (11) at a desired location (22) between the thigh meat of the leg and the drumstick meat of the leg, the method comprising the steps of:
(a) suspending the leg from a shackle (24);
(b) moving the shackle and the leg in a processing direction;
(c) measuring the drumstick or the thigh of the leg as it moves in the processing direction;
(d) obtaining information based upon the measurement of step (c) with the information being indicative of a desired location of the cut between the thigh meat and the drumstick meat;
(e) moving the leg toward a cutting blade (54);
(f) adjusting the position of the cutting blade based upon the information of step (d) so that the blade aligns with the desired location of the cut; and
(g) moving the shackle and the chicken leg past the past cutting blade to cut the leg at the desired location, wherein step (c) comprises bending the leg at the knee joint before making the measurement.

2. The method of claim 1 wherein step (a) comprises suspending the leg by the hock.

3. The method of claim 1 wherein step (a) comprises suspending the leg by the hip joint.

4. The method of claim 1 wherein the step of bending the leg comprises engaging the leg with a lift arm and articulating the lift arm to bend the leg.

5. The method of claim 4 wherein the step of engaging the leg comprises engaging the thigh of the leg.

6. The method of claim 1 wherein the step of bending the leg comprises engaging the leg with an inclined conveyor and moving the leg up the inclined conveyor to cause the leg to bend.

7. The method of claim 6 wherein the step of engaging the leg with an inclined conveyor comprises engaging the leg with a moving inclined ramp.

8. The method of claim 6 wherein the conveyor is angled away from the leg in addition to being inclined.

9. The method of claim 6 wherein the inclined conveyor comprises at least one belt driven up the incline and wherein the step of engaging the leg comprises engaging the leg with the at least one belt.

10. The method of claim 1 wherein step (c) comprises engaging a measuring device with the leg as the leg is conveyed along the processing path.

11. The method of claim 10 wherein the step of engaging a measuring device comprises engaging a pivotal arm of the measuring device with the leg and pivoting the pivotal arm with the leg, the information obtained in step (d) being related to the magnitude of the pivot.

12. The method of claim 11 further comprising depressing a plunger of a digitizer with the pivoting arm, the digitizer producing the information.

13. The method of claim 1 where in step (e) the cutting blade is a rotary cutter.

14. An apparatus for cutting a poultry leg (11) at a desired location between the thigh meat of the leg and the drumstick meat of the leg, the apparatus comprising:
a conveyor (71) movable in a downstream processing direction;
a plurality of shackle assemblies (24) attached at spaced intervals along the conveyor, each shackle assembly being configured to hold a leg in a suspended condition and to convey the suspended leg along the processing path;
a measuring station (41) located along the processing path and being configured to produce information indicative of the desired location for the leg as the leg is conveyed through the measuring station;
a controller (47) coupled to receive the produced information from the measuring station and to associate the produced information with the leg;
a cutting station (51) located along the processing path downstream of the measuring station and including a blade configured to cut the leg as the leg is conveyed past the cutting station;
an actuator (56) coupled to the blade and to the controller, the actuator being configured to move the blade selectively to preselected positions with respect the leg as the leg is conveyed toward the blade;
the controller using the information produced for the leg to cause the actuator to move the blade to a position such that it will cut the leg at the desired location as the leg passes the cutting station, wherein the measuring station comprises a mechanism for bending the leg prior to producing the information indicative of the desired location.

15. The apparatus of claim 14 wherein the mechanism for bending comprises a lift arm configured to be articulated into engagement with the leg to cause the leg to bend.

16. The apparatus of claim 15 wherein the lift arm articulates as the lift arm and the leg move in synchronization around an arcuate portion of the processing path.

17. The apparatus of claim 14 wherein the mechanism for bending comprises an inclined conveyor located along a liner portion of the processing path and configured to be engaged by the leg moving along the processing path and to bend the leg as the leg is moved up the inclined conveyor.

18. The apparatus of claim 17 wherein the inclined conveyor comprises an inclined ramp assembly.

19. The apparatus of claim 18 wherein the inclined ramp assembly comprises at least one moving belt that is engaged by the leg and that carries a portion of the leg up the inclined ramp assembly.

## Patentansprüche

1. Verfahren zum Schneiden eines Geflügelbeins (11) an einer gewünschten Stelle (22) zwischen dem Schenkelfleisch des Beins und dem Schlegelfleisch, das Verfahren umfassend folgende Schritte:
(a) Aufhängen des Beins von einer Fessel (24);
(b) Bewegen der Fessel und des Beins in eine Verarbeitungsrichtung;
(c) Messen des Schlegels oder des Schenkels des Beins, während es sich in die Verarbeitungsrichtung bewegt;
(d) Beziehen von Information basierend auf der Messung von Schritt (c), welche Information anzeigend für eine gewünschte Stelle des Schnitts zwischen dem Schenkelfleisch und dem Schlegelfleisch ist;
(e) Bewegen des Beins zu einer Schneideklinge (54);
(f) Anpassen der Position der Schneideklinge basierend auf der Information von Schritt (d), sodass die Klinge mit der gewünschten Stelle des Schnitts ausgerichtet wird; und
(g) Bewegen der Fessel und des Beins vorbei an der Schneideklinge, um das Bein an der gewünschten Stelle zu schneiden, wobei Schritt (c) das Biegen des Beins am Kniegelenk umfasst, bevor die Messung erfolgt.

2. Verfahren nach Anspruch 1, wobei Schritt (a) das Aufhängen des Beins am Sprunggelenk umfasst.

3. Verfahren nach Anspruch 1, wobei Schritt (a) das Aufhängen des Beins am Hüftgelenk umfasst.

4. Verfahren nach Anspruch 1, wobei der Schritt des Biegens des Beins das Ergreifen des Beins mit einem Hebearm und Artikulieren des Hebearms zum Biegen des Beins umfasst.

5. Verfahren nach Anspruch 4, wobei der Schritt des Ergreifens des Beins das Ergreifen des Schenkels des Beins umfasst.

6. Verfahren nach Anspruch 1, wobei der Schritt des Biegens des Beins mit einem geneigten Förderer und Bewegen des Beins an dem geneigten Förderer hinauf das Bein veranlasst, sich zu biegen.

7. Verfahren nach Anspruch 6, wobei der Schritt des Ergreifens des Beins mit einem geneigten Förderer das Ergreifen des Beins mit einer bewegenden geneigten Rampe umfasst.

8. Verfahren nach Anspruch 6, wobei der Förderer von dem Bein weg angewinkelt ist, zusätzlich dazu, dass es geneigt ist.

9. Verfahren nach Anspruch 6, wobei der geneigte Förderer mindestens einen Riemen, der die Neigung hinauf angetrieben wird, umfasst, und wobei der Schritt des Ergreifens des Beins das Ergreifen des Beins mit dem mindestens einen Riemen umfasst.

10. Verfahren nach Anspruch 1, wobei der Schritt (c) das Ergreifen einer Messvorrichtung mit dem Bein umfasst, während das Bein entlang des Verarbeitungswegs befördert wird.

11. Verfahren nach Anspruch 10, wobei der Schritt des Ergreifens einer Messvorrichtung das Ergreifen eines Dreharms der Messvorrichtung mit dem Bein und Drehen des Dreharms mit dem Bein umfasst, wobei die in Schritt (d) gewonnene Information sich auf die Größenordnung der Drehung bezieht.

12. Verfahren nach Anspruch 11, ferner umfassend das Niederdrücken eines Kolbens eines Digitalisierers mit dem Dreharm umfasst, welcher Digitalisierer die Information produziert.

13. Verfahren nach Anspruch 1, wobei in Schritt (e) die Schneideklinge ein Rotationsschneider ist.

14. Vorrichtung zum Schneiden eines Geflügelbeins (11) an einer gewünschten Stelle zwischen dem Schenkelfleisch des Beins und dem Schlegelfleisch des Beins, die Vorrichtung umfassend
einen Förderer (71), beweglich in einer Stromabwärts-Verarbeitungsrichtung;
eine Vielzahl von Fesselanordnungen (24), befestigt in beabstandeten Intervallen entlang des Förderers, jede Fesselanordnung konfiguriert, um ein Bein in einem aufgehängten Zustand zu halten und das aufgehängte Bein entlang des Verarbeitungswegs zu bewegen;
eine Messstation (41), angeordnet entlang des Verarbeitungswegs und konfiguriert zum Produzieren von Information, anzeigend für die gewünschte Stelle für das Bein, während das Bein durch die Messstation bewegt wird;
einen Controller (47), gekoppelt zum Aufnehmen der produzierten Information von der Messstation und zum Assoziieren der produzierten Information mit dem Bein;
eine Schneidestation (51), angeordnet entlang des Verarbeitungswegs stromabwärts von der Messstation und umfassend eine Klinge, konfiguriert zum Schneiden des Beins, während das Bein vorbei an der Schneidestation befördert wird;
einen Aktuator (56), gekoppelt an die Klinge und an den Controller, welcher Aktuator konfiguriert ist, die Klinge selektiv zu vorgewählten Positionen in Bezug auf das Bein zu bewegen, während das Bein zu der Klinge hinbewegt wird;
der Controller verwendend die Information, produziert für das Bein, um den Aktuator zu veranlassen, die Klinge zu einer Position zu bewegen, sodass sie das Bein an der gewünschten Stelle schneidet, während das Bein die Schneidestation passiert,
wobei die Messstation einen Mechanismus zum Biegen des Beines vor dem Produzieren der Information, anzeigend für die gewünschte Stelle, umfasst.

15. Vorrichtung nach Anspruch 14, wobei der Mechanismus zum Biegen einen Hebearm umfasst, konfiguriert um in Eingriff mit dem Bein artikuliert zu werden, um das Bein zu veranlassen, sich zu biegen.

16. Vorrichtung nach Anspruch 15, wobei der Hebearm artikuliert, während der Hebearm und das Bein sich synchron um einen gebotenen Teil des Verarbeitungswegs bewegen.

17. Vorrichtung nach Anspruch 14, wobei der Mechanismus zum Biegen einen geneigten Förderer umfasst, angeordnet entlang eines linearen Abschnitts des Verarbeitungswegs und konfiguriert, um von dem sich entlang des Verarbeitungswegs bewegenden Bein ergriffen zu werden und das Bein zu biegen, während das Bein auf dem Förderer aufwärts bewegt wird.

18. Vorrichtung nach Anspruch 17, wobei der geneigte Förderer eine geneigte Rampenanordnung umfasst.

19. Vorrichtung nach Anspruch 18, wobei die geneigte Rampenanordnung mindestens ein bewegendes Band umfasst, das von dem Bein ergriffen wird und das einen Teil des Beins auf der geneigten Rampenanordnung aufwärts bewegt.

## Revendications

1. Une procédé de découpage d'une cuisse de volaille (11) en un emplacement recherché (22) situé entre la chair du haut de la cuisse et la chair du pilon de la cuisse, le procédé comprenant les étapes consistant à:
(a) suspendre la cuisse à un crochet (24);
(b) déplacer le crochet et la cuisse selon la direction du chemin de traitement;
(c) mesurer la longueur du haut de la cuisse ou du pilon pendant leur déplacement selon la direction du chemin de traitement;
(d) obtenir des informations basées sur les mesures effectuées dans l'étape (c), ces informations étant indicatives de l'emplacement recherché de la découpe entre la chair du haut de la cuisse et la chair du pilon;
(e) déplacer la cuisse vers une lame de coupe (54);
(f) ajuster, sur la base des informations de l'étape (d), la position de la lame de coupe de sorte que la lame s'aligne avec l'emplacement recherché de la découpe; et
(g) déplacer le crochet et la cuisse au-delà de la lame de coupe pour découper la cuisse à l'emplacement recherché,
dans lequel l'étape (c) comprend la flexion de la cuisse au niveau de l'articulation du genou avant de procéder à la mesure.

2. Le procédé selon la revendication 1, dans lequel l'étape (a) comprend la suspension de la cuisse par le jarret.

3. Le procédé selon la revendication 1, dans lequel l'étape (a) comprend la suspension de la cuisse par l'articulation de la hanche.

4. Le procédé selon la revendication 1, dans lequel l'étape de flexion de la cuisse comprend l'engagement dans la cuisse d'un bras de levage et l'articulation du bras de levage pour provoquer la flexion de la cuisse.

5. Le procédé selon la revendication 4, dans lequel l'étape d'engagement de la cuisse comprend l'engagement dans le haut de la cuisse.

6. Le procédé selon la revendication 1, dans lequel l'étape consistant à plier la cuisse comprend l'engagement de la cuisse sur un convoyeur incliné et le déplacement avec levage de la cuisse vers le haut du convoyeur incliné pour provoquer la flexion de la cuisse.

7. Le procédé selon la revendication 6, dans lequel l'étape d'engagement de la cuisse sur le convoyeur incliné comprend l'engagement de la cuisse sur une rampe inclinée mobile.

8. Le procédé selon la revendication 6, dans lequel le convoyeur forme un angle par rapport à la cuisse en plus de son inclinaison.

9. Le procédé selon la revendication 6, dans lequel le convoyeur comprend au moins une courroie entraînée vers le haut selon l'inclinaison et dans lequel l'étape d'engagement de la cuisse comprend l'engagement de la cuisse avec ladite au moins une courroie.

10. Le procédé selon la revendication 1, dans lequel l'étape (c) comprend l'engagement d'un dispositif de mesure avec la cuisse pendant que la cuisse se déplace sur le chemin de traitement.

11. Le procédé selon la revendication 10, dans lequel l'étape d'engagement d'un dispositif de mesure comprend l'engagement d'un bras pivotant du dispositif de mesure dans la cuisse et le pivotement du bras pivotant et donc de la cuisse, l'information obtenue à l'étape (d) étant liée à l'amplitude du pivotement.

12. Le procédé selon la revendication 11, comprenant en outre l'enfoncement d'un plongeur d'un numériseur avec le bras pivotant, le numériseur produisant l'information.

13. Le procédé selon la revendication 1, dans lequel, à l'étape (e), la lame de coupe est une lame rotative.

14. Un appareil de découpage d'une cuisse de volaille(ll) en un emplacement recherché entre la chair du haut de la cuisse et la chair du pilon, l'appareil comprenant:
- un convoyeur (71) pouvant se déplacer selon une direction de traitement en aval;
- une pluralité d'ensembles de crochets (24) fixées à des intervalles espacés le long du convoyeur, chaque ensemble de crochets étant configuré pour maintenir une cuisse dans un état suspendu et pour transporter la cuisse à l'état suspendu le long du chemin de traitement;
- une station de mesure (41) située le long du chemin de traitement et configurée pour produire une information indiquant l'emplacement recherché de la cuisse pendant le passage de la cuisse dans la station de mesure;
- un contrôleur (47) couplé pour recevoir les informations produites par la station de mesure et pour associer les informations obtenues pour la cuisse;
- une station de découpe (51) située sur le du chemin de traitement en aval de la station de mesure et comprenant une lame configurée pour découper la cuisse lorsque la cuisse convoyée passe au-delà de la station de découpe;
- un actionneur (56) couplé à la lame et au contrôleur, cet actionneur étant configuré pour déplacer sélectivement la lame vers des positions présélectionnées par rapport à la cuisse alors que la cuisse se déplace vers la lame;
- le contrôleur utilisant l'information produite pour la cuisse pour amener l'actionneur à déplacer la lame dans une position telle qu'elle va couper la cuisse à l'emplacement recherché pendant que la cuisse passe par la station de découpe,
dans lequel la station de mesure comprend un mécanisme pour provoquer la flexion de la cuisse avant d'obtenir l'information indiquant l'emplacement recherché.

15. L'appareil selon la revendication 14, dans lequel le mécanisme de flexion comprend un bras de levage configuré pour être articulé et s'engager dans la cuisse pour provoquer la flexion de la cuisse.

16. L'appareil selon la revendication 15, dans lequel le bras de levage s'articule pour former un bras de levage et la cuisse se déplace en synchronisation autour d'une partie en forme d'arc de cercle du chemin de traitement.

17. L'appareil selon la revendication 14, dans lequel le mécanisme de flexion comprend un convoyeur incliné situé le long d'une partie de revêtement du chemin de traitement et configuré pour être engagé par la cuisse se déplaçant le long du chemin de traitement et pour provoquer la flexion de la cuisse lorsque la cuisse est déplacée vers le haut par le convoyeur incliné.

18. L'appareil selon la revendication 17, dans lequel le convoyeur incliné comprend un ensemble formant rampe inclinée.

19. L'appareil selon la revendication 18, dans lequel l'ensemble formant rampe inclinée comprend au moins une courroie mobile qui est engagée dans la cuisse et qui déplace une partie de la cuisse vers le haut de la rampe inclinée.
